Europäisches Patentamt

European Patent Office

Office européen des brevets

(11) Veröffentlichungsnummer: **0 052 390**
**B1**

# EUROPÄISCHE PATENTSCHRIFT

(45) Veröffentlichungstag der Patentschrift:
09.05.84

(51) Int. Cl.³: **H 04 B 1/74**, H 04 L 11/16

(21) Anmeldenummer: **81201177.3**

(22) Anmeldetag: **23.10.81**

(54) Verfahren zum Funktionsfähighalten einer digitalen Nachrichtenübertragungseinrichtung und Anwendung desselben.

(30) Priorität: **13.11.80 CH 8430/80**

(43) Veröffentlichungstag der Anmeldung:
**26.05.82 Patentblatt 82/21**

(45) Bekanntmachung des Hinweises auf die Patenterteilung:
**09.05.84 Patentblatt 84/19**

(84) Benannte Vertragsstaaten:
**AT BE CH DE FR GB IT LI NL SE**

(56) Entgegenhaltungen:
**CH - A - 584 492**
**US - A - 3 742 154**

**1976 INTERNATIONAL ZÜRICH SEMINAR ON DIGITAL COMMUNICATIONS, 9-11 März 1976, IEEE LONG BEACH (US) HAFNER et al.: "Enhancing the availability of a loop system by meshing", Seiten D4.1 bis D4.5**
**IBM TECHNICAL DISCLOSURE BULLETIN, Band 21, Nr. 8, Januar 1979 NEW YORK (US) LEE: "Dynamically reconfigurable logical ring network", Seiten 3349 und 3350**

(73) Patentinhaber: **Hasler AG, Belpstrasse 23, CH-3000 Bern 14 (CH)**

(72) Erfinder: **Braun, Fritz, Dr., Eggweg 13, CH-3065 Bolligen (CH)**

(74) Vertreter: **Schwerdtel, Eberhard, Dr., c/o Hasler AG Belpstrasse 23, CH-3000 Bern 14 (CH)**

## Beschreibung

Die Erfindung betrifft ein Verfahren zum Funktionsfähighalten einer digitalen Nachrichtenübertragungseinrichtung beim Auftreten von im Vergleich zur räumlichen Ausdehnung der Einrichtung örtlich begrenzten Fehlerquellen durch gezieltes Ausklammern dieser Fehlerquellen, wobei die im Oberbegriff des Anspruchs 1 angegebenen Massnahmen vorgesehen sind.

Umfangreiche Nachrichtenübertragungseinrichtungen müssen im allgemeinen eine hohe Verfügbarkeit aufweisen. Da jedoch Fehler, die die Verfügbarkeit reduzieren, grundsätzlich nicht auszuschliessen sind, müssen, damit die Forderung der Verfügbarkeit dennoch erfüllbar wird, redundante Baugruppen eingeführt werden. Weiter müssen Massnahmen zur laufenden oder periodischen Überwachung der Funktionsfähigkeit der Einrichtungen vorgesehen werden.

Aus der schweizerischen Patentschrift 584 492 ist eine ringförmige, redundante Übertragungseinrichtung bekannt, bei der jede Teilnehmerstelle zopfartig mit jeweils zwei oder mehr signalmässig vorausgehenden und einer entsprechenden Anzahl signalmässig nachfolgenden anderen Teilnehmerstellen verbunden ist. Beim Ausfall einer Teilnehmerstelle oder eines Übertragungsleitungs-Abschnittes wird durch die im wesentlichen parallel geführten Übertragungsleitungen jeweils der Fehlerort überbrückt. Hierdurch entsteht bei örtlich begrenzten Fehlerquellen keine schwerwiegende Beeinträchtigung der Übertragungseinrichtung als solcher. Es wird einzig der Verkehr mit den überbrückten Teilnehmerstellen unterbrochen.

Die genannte Patentschrift gibt nicht an, nach welchen Kriterien die Teilnehmerstellen jeweils an eine ihrer Eingangsleitungen angeschlossen sind. Es ist daher Aufgabe der Erfindung, diese Lücke zu schliessen und ein Verfahren anzugeben, mittels dessen erreicht wird, dass im Falle einzelner Fehlerquellen ausschliesslich die Orte dieser Fehlerquellen überbrückt werden. Hierbei soll gleichzeitig eine Meldung erfolgen, mittels der einer Überwachungsstelle der Fehlerort bekanntgemacht wird, wodurch gezielte Massnahmen zur Behebung des Fehlers einleitbar werden. Das Verfahren, das diese Aufgaben erfüllt, ist gekennzeichnet durch die Verfahrensschritte a) bis e) entsprechend dem kennzeichnenden Teil des Anspruchs 1. Das Verfahren ist anwendbar für alle Übertragungseinrichtungen mit einer einzigen Übertragungsrichtung. Insbesondere ist es geeignet für Ringsysteme, bei denen alle Nachrichten in ausschliesslich einer Richtung umlaufen.

Im folgenden wird die Erfindung anhand von 2 Figuren beispielsweise näher beschrieben. Es zeigen:

Fig. 1 Ringförmige Übertragungseinrichtung
Fig. 2 Blockschaltbild einer Anschlusseinheit.

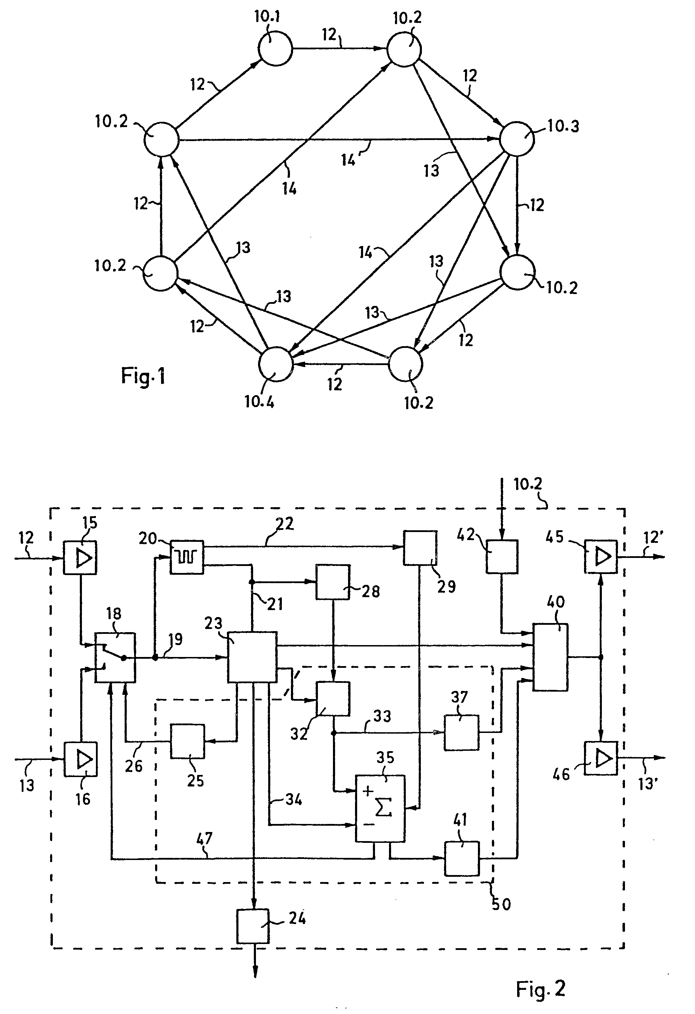

Fig. 1 zeigt eine aus der erwähnten schweizerischen Patentschrift 584 492 an sich bekannte Übertragungseinrichtung mit einer Vielzahl von Anschluss- oder Teilnehmereinheiten 10.1 bis 10.4, die über Verbindungsleitungen 12 ringförmig miteinander verbunden sind. Der Informationsaustausch erfolgt mittels codeadressierter Nachrichtenpakete in ausschliesslich einer Richtung was durch die Pfeilspitzen angedeutet ist. Die Anschlusseinheit 10.1 ist ausschliesslich an eine Eingangs- und eine Ausgangsleitung angeschlossen; die Anschlusseinheiten 10.2 sind jeweils an zwei Eingangs- und zwei Ausgangsleitungen angeschlossen; die Anschlusseinheit 10.3 weist drei Ausgangsleitungen und die Anschlusseinheit 10.4 weist drei Eingangsleitungen auf.

Die Leitungen 12 bilden zusammen mit den Anschlusseinheiten 10 eine geschlossene Ringleitung. Die anderen Übertragungsleitungen 13 und 14 dienen als Redundanz, indem sie zopfartig jeweils eine oder mehrere Anschlusseinheiten 10 überbrücken.

Jede Anschlusseinheit 10.2 bis 10.4 weist einen nicht gezeigten Umschalter auf, über den sie jeweils signalmässig an eine ihrer Eingangsleitungen 12, 13 oder 14 angeschlossen ist. Im allgemeinen, fehlerfreien Zustand ist jede Anschlusseinheit mit ihrer Eingangsleitung 12 verbunden. Wird jedoch eine der Leitungen 12 unterbrochen oder ist eine der Anschlusseinheiten 10 defekt, so kann die Fehlerquelle problemlos überbrückt werden, indem die in Signalrichtung direkt auf die Fehlerquelle nachfolgende Anschlusseinheit signalmässig auf die andere ihrer Eingangsleitungen 13 oder 14 umschaltet. Hierdurch lässt sich ausschliessen, dass durch einzelne Fehlerquellen die Übertragungseinrichtung total zusammenbricht.

Zur Überwachung der Übertragungseinrichtung sendet eine speziell ausgerüstete Anschlusseinheit, beispielsweise die Einheit 10.4, in einem im wesentlichen starren Zeittakt Prüfpakete an die anderen Anschlusseinheiten. Durch Empfang, Auswertung und Wiederaussenden dieser Prüfpakete lässt sich jeweils die Funktionsfähigkeit oder Nichtfunktionsfähigkeit der gesamten Übertragungseinrichtung leicht feststellen.

Fig. 2 zeigt ein Blockschaltbild einer Anschlusseinheit 10.2. Die Eingangsleitungen sind entsprechend Fig. 1 mit 12 und 13 bezeichnet. Sie sind an Eingangsverstärker 15 bzw. 16 angeschlossen, die zum Regenerieren und Verstärken der ankommenden Nachrichtenpakete dienen. 18 ist der bereits erwähnte Umschalter, der symbolisch als Relais-Umschaltkontakt gezeichnet ist. Er verbindet im Normalfall die Leitung 12 signalmässig mit den nachfolgend zu beschreibenden Untereinheiten.

An den Ausgang 19 des Umschalters 18 ist zum einen ein Taktregenerator 20 angeschlossen, der an seinen Ausgängen 21 und 22 Taktsignale abgibt, die synchron mit der Eingangstaktfrequenz sind. Zum anderen ist eine Empfangsschaltung 23 zum Empfang aller ankommenden Nachrichten- und sonstigen Pakete angeschlossen, die unter anderem zur Decodierung der Adressen der Nachrichtenpakete und zum Herauskopieren der für die Anschlusseinheit bestimmten Pakete dient. Je nach ihrem Inhalt werden die Pakete an die Einheiten 24, 25, 32, 35 oder 40 weitergegeben.

24 ist eine Anpassschaltung, die die empfangenen Nachrichtenpakete, die für ein an die Anschlusseinheit 10.2 angeschlossenes, nicht gezeigtes Endgerät bestimmt sind, weiter verarbeitet. Bei den Endgeräten kann es sich um Datenendgeräte, Fernschreiber, digital arbeitende Telefone usw. handeln. 25 ist eine Steuereinheit, in die Steuerpakete eingespeist werden und die unter anderem über die Leitung 26 aufgrund eines empfangenen Steuerpakets den Umschalter 18 umschaltet.

28 und 29 sind zwei Zeittakteinheiten, die aus dem Takt des Taktgenerators 20 periodische Zeitintervalle konstanter Länge ableiten, die gross sind im Vergleich zur Periode des Übertragungstaktes, wobei die Intervalle der Einheit 29 wiederum gross sind gegenüber denjenigen der Einheit 28, und wobei letztere im wesentlichen dem Takt der Aussendung der Prüfpakete durch die Anschlusseinheit 10.4 entsprechen.

32 ist eine Prüfschaltung, die herauskopierte Prüfpakete daraufhin untersucht, ob sie fehlerfrei sind. Stellt die Prüfschaltung 32 einen Fehler in einem Prüfpaket fest, oder bemerkt sie das Ausbleiben eines Prüfpaketes, so gibt sie eine entsprechende Fehlermeldung über ihre Ausgangsleitung 33 an die noch zu beschreibenden Einheiten Fehlersummenzähler 35 und Fehlermelder 37 ab.

Der Fehlersummenzähler 35 umfasst eine Vorwärts-Rückwärtszähleinrichtung mit einem Vorwärts- (+) und einem Rückwärtszähleingang (-). Ersterer ist mit der Prüfschaltung 32 verbunden, letzterer mit der Empfangsschaltung 23. Der Fehlermelder 37 stellt für jede Fehlermeldung der Prüfschaltung 32 ein Fehlermeldepaket zusammen, welches einem Multiplexer 40 zugeführt wird.

41 ist ein Alarmmelder, dessen Eingang mit einem Ausgang des Fehlersummenzählers 35 verbunden ist. Er stellt aufgrund jeder Fehlermeldung des Fehlersummenzählers 35 ein Alarmmeldepaket zusammen und führt es dem Multiplexer 40 zu. 42 ist ein Nachrichtensender, der von der Anschlusseinheit 10.2 abzusendende allgemeine Nachrichtenpakete zusammenstellt und diese ebenfalls dem Multiplexer 40 zuführt.

Der Multiplexer 40 schaltet die von den Einheiten 23, 37, 41 und 42 abzusendenden Pakete über die Ausgangsverstärker 45 und 46 auf die Ausgangsleitungen 12′ und 13′ durch. Er sorgt dafür, dass die Pakete als ununterbrochener Nachrichtenfluss im richtigen Takt ausgesendet werden. Liegen keine abzusendenden Pakete vor, so sendet er Leerpakete aus.

Das Verfahren zum Funktionsfähighalten der Nachrichtenübertragungseinrichtung entsprechend Fig. 1 ist nun folgendes: In jeder Anschlusseinheit 10.2 bis 10.4 verbinden die Umschalter 18 im allgemeinen die Eingangsleitungen 12 mit den Empfangsschaltungen 23. Diese prüfen laufend die ankommenden Pakete. Entsprechend den Adressen und Steuerinformationen werden Pakete aus dem Fluss der anderen Pakete herausgenommen und an eine der Einheiten 24, 25, 32 oder 35 weitergegeben oder dem Multiplexer 40 zugeführt. Die Prüfschaltung 32 überprüft die Prüfpakete auf Fehlerfreiheit. Für jedes fehlerhafte Prüfpaket, beispielsweise bei einem Bitfehler im Paket, gibt sie eine Fehlermeldung sowohl an den Vorwärtszähleingang (+) des Fehlersummenzählers 35 als auch an den Fehlermelder 37 ab. Eine entsprechende, jedoch mit einem höheren Wertungsfaktor versehene Fehlermeldung erfolgt, wenn die Prüfschaltung 32 feststellt, dass eines der von der Anschlusseinheit 10.4 in regelmässigen Abständen ausgesandten Prüfpakete nicht empfangen wurde, da es beispielsweise unterwegs verlorengegangen ist oder verstümmelt wurde, oder weil eine Leitung unterbrochen ist usw. Hierzu wird die Prüfschaltung 32 durch die Zeittakteinheit 28 mit Zeitintervallen versorgt, deren Dauer gleich ist der Taktperiode der Prüfpaket-Aussendung durch die Anschlusseinheit 10.4 hierdurch wird vorgegeben, dass in jedes Zeitintervall jeweils genau ein Prüfpaket zu fallen hat.

Der Fehlersummenzähler 35 zählt die gemeldeten Fehler unter Berücksichtigung des jeweils angegebenen Wertungsfaktors. Der Fehlermelder 37 stellt gleichzeitig für jede Fehlermeldung ein Fehlermeldepaket zusammen. Dieses wird über die Leitungen 12′ und 13′ ausschliesslich an die Anschlusseinheiten gesandt, die jeweils direkt auf die absendende Anschlusseinheit nachfolgen. Jede Anschlusseinheit, die ein derartiges Fehlermeldepaket empfängt (sie erkennt dieses mit Hilfe der Empfangsschaltung 23), gibt über die Leitung 34 an den Rückwärtszähleingang (-) des Fehlersummenzählers 35 ein entsprechendes Fehlersignal ab, wodurch der Zählbetrag des Fehlersummenzählers um einen dem gemeldeten Fehler entsprechenden Betrag vermindert wird. Gleichzeitig wird das Fehlermeldepaket vernichtet.

Auf diese Weise tragen bei jeder Anschlusseinheit ausschliesslich diejenigen Fehler zur Erhöhung des Zählbetrages des Fehlersummenzählers 35 bei, die einzig von der entsprechenden und nicht auch von einer im Signalfluss vorhergehenden Anschlusseinheit registriert werden bzw. wurden.

Jedem Fehlersummenzähler 35 wird über die zugeordnete Zeittakteinheit 29 ein Zeittakt aufgeprägt, so dass aus dem Zählwert des Fehlersummenzählers 35 und diesem Zeittakt eine mittlere Fehlerrate abschätzbar ist. Ist diese Fehlerrate grösser als ein erster vorgegebener Fehlerratenwert, so wird über den Alarmmelder 41 ein Alarmmeldepaket an die Anschlusseinheit 10.4 abgesandt. Überschreitet die Fehlerrate dagegen einen zweiten, höheren Fehlerratenwert, so wird über die Leitung 47 der Umschalter 18 auf die Eingangsleitung 13 umgeschaltet und dies mittels eines anderen Alarmmeldepaketes der Anschlusseinheit 10.4 gemeldet.

Die Unterteilung der Fehlerrate nach drei Bereichen «Fehlerrate niedrig», «Fehlerrate erhöht» und «Fehlerrate unakzeptabel hoch» kann dadurch erfolgen, dass im Fehlersummenzähler 35 zwei unabhängige Zähler gleichzeitig die Fehlermeldungen aufsummieren. Jeder Zähler prüft beim Erreichen eines ihm vorgegebenen Zählwertes – wobei diese Zählwerte verschieden hoch sind – ob die durch die Zeittakteinheit 29 bestimmten und mit Zählbeginn jeweils gestarteten gleichlangen Zeitintervalle jeweils bereits abgelaufen sind oder nicht. Ist das zugeordnete Zeitintervall bereits abgelaufen, so ist die mittlere Fehlerrate jeweils kleiner als die Rate, die dem Quotienten aus dem vorgegebenen Zählwert und dem Zeitintervall entspricht. Ist das Zeitintervall dagegen noch nicht abgelaufen, so ist die mittlere Fehlerrate grösser als die genannte Rate, und es erfolgt – wie beschrieben – entweder eine Alarmmeldung, oder der Umschalter 18 wird umgeschaltet.

Es ist auch möglich, jeweils nach Ablauf des mit Zählbeginn gestarteten Zeitintervalls zu prüfen, ob die Zähler des Fehlersummenzählers 35 einen vorgegebenen Zählwert erreicht haben oder nicht. Wurde der eine oder der andere der vorgegebenen Zählwert erreicht haben oder nicht. Wurde der eine oder der andere der vorgegebenen, als Schwelle dienenden Zählwerte erreicht oder gar überschritten, so erfolgt entsprechend dem vorigen Abschnitt eine Alarmmeldung usw. Vorteilhaft ist es, jeweils direkt nach Abschluss eines Prüfzyklusses den nächsten Prüfzyklus zu beginnen, d.h. die Zähler auf Null zu stellen und die nächste Zählung zu starten. Das geschilderte Verfahren zum Funktionsfähighalten der Nachrichtenübertragungseinrichtung hat folgende Vorteile:

– Im Fehlerfall wird unabhängig von irgendeiner zentralen Bewertungs- oder Überwachungsstelle jeweils nur der Umschalter 18 derjenigen Anschlusseinheit 10 umgeschaltet, die in Signalrichtung direkt auf die Fehlerquelle bzw. den fehlererzeugenden Ort nachfolgt. Dies bewirkt automatisch die Überbrückung der Fehlerquelle, wodurch die restliche Nachrichtenübertragungseinrichtung weitgehend funktionsfähig bleibt bzw. wieder wird.

– Sich ankündigende Defekte und festgestellte Fehlerquellen werden mittels Alarmmeldepaketen gemeldet, was gestattet, gezielte Massnahmen zur Behebung des Fehlers einzuleiten.

– Die Umschaltung des Umschalters 18 erfolgt aufgrund einer gewissen Mittelung, wodurch fehlerhafte Umschaltungen aufgrund kurzzeitiger Störungen weitgehend vermieden werden.

Die Rückschaltung eines Umschalters 18 in die Ausgangslage erfolgt nach Behebung der Fehlerursache mit Hilfe eines Steuerpakets, welches über die zugeordnete Empfangsschaltung 23 und die Steuereinheit 25 auf die Leitung 26 einwirkt. Dieses Vorgehen verhindert im Gegensatz zu einer selbständigen Rückumschaltung, dass ein Umschalter 18 u.U. zwischen seinen zwei Schaltstellungen fehlerhaft ständig hin und her pendelt.

Das beschriebene Verfahren, das mit Umschaltern 18 arbeitet, die entsprechend den Bedürfnissen der Anschlusseinheiten 10.2 und 10.3 zwei Schalterstellungen aufweisen, ist selbstverständlich auch anwendbar bei Anschlusseinheiten 10.4 mit Mehrstellungs-Umschaltern. Hierbei ist jedoch ein Kriterium einzuführen, in welcher Reihenfolge der Umschalter umzuschalten hat.

Das Verfahren wurde anhand einer ringförmigen Übertragungseinrichtung geschildert. Diese Übertragungseinrichtung kann weitläufig (z.B. Einfamilienhaus-Siedlung), weniger weitläufig (z.B. Fabrikanlage) oder relativ begrenzt (z.B. innerhalb eines Gebäudestockwerkes zusammengeschaltete selbstständige Computer) sein. Unabhängig von dieser räumlichen Ausdehnung gestattet das Verfahren Fehlerquellen, die im Vergleich zur gesamten Übertragungseinrichtung räumlich eng begrenzt sind, auszuklammern. Dies bedeutet, dass alle Fehler, die in einer einzelnen Übertragungsleitung oder in einer einzelnen Anschlusseinheit 10 auftreten, erfasst werden. Nicht erfasst werden dagegen gekoppelte Fehler, die parallel verlegte Übertragungsleitungen 12, 13 und/oder 14 gleichzeitig betreffen oder gleichzeitige gekoppelte oder unabhängige Defekte von zwei oder mehr direkt aufeinanderfolgenden Anschlusseinheiten 10. Wird eine Anschlusseinheit 10.4 überbrückt, die – wie beschrieben – speziell ausgerüstet ist zum Aussenden der Prüfpakete, so muss diese Funktion selbstverständlich durch eine andere, entsprechend eingerichtete Anschlusseinheit übernommen werden.

Das Verfahren ist ausser für Ringübertragungseinrichtungen auch bei linearen Übertragungsstrecken für eine einzige Signalübertragungsrichtung anwendbar, bei denen die Übertragungsleitungen zopfartig redundant verlegt und mit den Anschlusseinheiten oder geeignet ausgebildeten Regeneratoreinheiten verbunden sind.

Das Verfahren ist weiter anwendbar für alle digitalen Übertragungseinrichtungen, die statt mit einer Codeadressierung mit festen Zeitzuordnungen und/oder Rahmensynchronisierungen arbeite, z.B. PCM-Übertragungsstrecken. Hierbei bildet nicht die Adresse der Pakete das Kriterium, ob eine Nachricht für die Anschlusseinheit bestimmt ist oder nicht, sondern eine Zeitschlitznummer, die innerhalb der Rahmensynchronisierung fest zugeordnet ist.

Ansonsten ist zu bemerken, dass die in Fig. 2 gezeigte beispielsweise Anordnung auf mannigfaltige Art variiert werden kann, ohne dass das Verfahren als solches verändert wird. Variationen sind beispielsweise möglich bei der Art des Fehlersummenzählers, der Art der Fehlerbewertung, der Art der Fehlermeldung usw. Auch können beispielsweise die Einheiten 25, 32, 35, 37 und 41 zusammengefasst werden zu einer gestrichelt angedeuteten Überwachungseinheit 50, die im wesentlichen einen Mikroprozessor umfasst, mit dessen Hilfe die durch die genannten Einheiten auszuführenden Funktionen im Multiplexverfahren erledigt werden.

## Patentansprüche

1. Verfahren zum Funktionsfähighalten einer digitalen Nachrichtenübertragungseinrichtung beim Auftreten von im Vergleich zur räumlichen Ausdehnung der Einrichtung örtlich begrenzten Fehlerquellen durch gezieltes Ausklammern dieser Fehlerquellen, wobei

- eine Mehrzahl von in Serie geschalteten Anschlusseinheiten (10) vorgesehen sind, von denen jede über wenigstens eine Eingangsleitung (12, 13, 14) mit einer entsprechenden Anzahl in Signalrichtung vorhergehenden und über wenigstens eine Ausgangsleitung (12', 13') mit einer entsprechenden Anzahl in Signalrichtung nachfolgenden Anschlusseinheiten (10) verbunden ist;
- zumindest eine Überwachungsstelle (10.4) vorgesehen ist, die Prüfpakete zur Überprüfung der Funktionsfähigkeit der Einrichtung aussendet;
- jede Anschlusseinheit mit wenigstens zwei Eingangsleitungen einen Umschalter (18) aufweist, über den die Anschlusseinheit signalmässig wahlweise an eine ihrer Eingangsleitungen (12, 13, 14) angeschlossen ist;
- die Nachrichtenübertragung mittels Nachrichtenpaketen in ausschliesslich einer Signalrichtung durch Weitergabe der Pakete von Anschlusseinheit zu Anschlusseinheit erfolgt;
- jede Anschlusseinheit (10) eine Empfangsschaltung (23) zum Erkennen und zum Empfang für sie bestimmter Pakete aufweist, dadurch gekennzeichnet, dass

a) eine der Überwachungsstellen (10.4) laufend in einem im wesentlichen starren Zeittakt Prüfpakete aussendet, die an alle Anschlusseinheiten (10) gerichtet sind;
b) in jeder Anschlusseinheit (10) eine Prüfschaltung (32) prüft, ob in den durch den Zeittakt der Überwachungsstelle (10.4) vorgegebenen Abständen jeweils ein Prüfpaket empfangen wird und, wenn dies der Fall ist, ob dieses fehlerfrei ist;
c) jede Anschlusseinheit (10) für jedes fehlende oder fehlerhafte Prüfpaket eine entsprechende Fehlermeldung abgibt zum einen an einen eigenen Fehlersummenzähler (35) und zum anderen mittels eines Fehlermeldepakets an alle nachfolgenden Anschlusseinheiten, die durch eine Leitung (12, 13, 14) direkt mit der Anschlusseinheit (10) verbunden sind;
d) jeder Fehlersummenzähler (35) für jede von der eigenen Anschlusseinheit (10) empfangene Fehlermeldung seinen Zählbetrag um einen dem Fehler zugeordneten Betrag erhöht und für jede mittels eines Fehlermeldepakets empfangene Fehlermeldung seinen Zählbetrag entsprechend vermindert;
e) in jeder Anschlusseinheit (10) die Rate der zeitlichen Zählbetragsänderung mit wenigstens einem vorgegebenen Ratenschwellwert verglichen und der Umschalter (18), sofern die zeitlich gemittelte Rate den Ratenschwellwert überschreitet, auf eine andere der Eingangsleitungen (12, 13, 14) umgeschaltet wird.

2. Verfahren nach Anspruch 1, dadurch gekennzeichnet, dass der Vergleich der gemittelten Rate der zeitlichen Zählbetragsänderung mit dem Ratenschwellwert dadurch vorgenommen wird, dass jeweils nach Erreichen eines vorgegebenen Zählbetrages geprüft wird, ob ein gleichzeitig mit der Zählung gestarteter Zeitzähler ein vorgegebenes Zeitintervall überschritten hat oder nicht.

3. Verfahren nach Anspruch 1, dadurch gekennzeichnet, dass der Vergleich der gemittelten Rate der zeitlichen Zählbetragsänderung mit dem Ratenschwellwert dadurch vorgenommen wird, dass jeweils bei Ablauf eines vorgegebenen Zeitintervalls geprüft wird, ob der während des Zeitintervalls erreichte Zählbetrag grösser oder kleiner ist als ein vorgegebener Zählbetrag.

4. Verfahren nach einem der Ansprüche 1 bis 3, dadurch gekennzeichnet, dass der einem fehlenden Prüfpaket zugeordnete Betrag grösser ist als der einem fehlerhaften Prüfpaket zugeordnete Betrag.

5. Anwendung des Verfahrens nach einem der Ansprüche 1 bis 4 zum Funktionsfähighalten einer ringförmigen Nachrichtenübertragungseinrichtung (Fig. 1), bei der der Nachrichtenaustausch zwischen den Anschlusseinheiten (10) mittels codeadressierter Pakete erfolgt.

## Claims

1. Method for maintaining the operational capability of a digital telecommunications system during the appearance of faults, the sources of which are local compared to the total spatial extent of the system, by specific bracketing-out of these fault sources, whereby
- several connecting units (10), connected in series, are foreseen, of which each is connected via at least one input line (12, 13, 14) with an appropriate number of, related to the signal direction, preceding connecting units (10) and via at least one output line (12', 13') with an appropriate number of, related to the signal direction, following connecting units (10);
- at least one monitor (10.4) is foreseen, which transmits test packets to check the functional capability of the system;
- every connecting unit (10) with at least two input lines has a change-over switch (18), via which the signals of alternatively one of the input lines (12, 13, 14) reach the connecting unit (10);
- the communication is achieved by transmitting packets in a single direction only from connecting unit (10) to connecting unit (10);
- every connecting unit (10) has a receiver (23) for identifying and receiving packets destined for it, characterized by the features that

a) one of the monitors (10.4) continuously transmits, with essentially fixed timing, test packets which are addressed to all connecting units (10);
b) in every connecting unit (10) a test circuit (32) checks whether or not a test packet is received within the period given by the timing of the monitor (10.4) and if this is the case, whether it is free from errors;
c) for every missing or faulty test packet every connecting unit (10) outputs an appropriate error indication to, on the one hand an internal error sum counter (35) and on the other hand, using an error indication packet, to all following connecting units (10) which are directly connected by line (12, 13, 14) to the connecting unit (10);
d) each error sum counter (35) increments its count by an amount allocated to the particular error indication for each error indication received from its own connecting unit (10) and decrements its count by an appropriate amount for each error indication received via an error packet;
e) in every connecting unit (10), the count rate per unit time is compared with at least one predefined rate threshold and the change-over switch (18) is switched to another input line (12, 13, 14) if the averaged rate exceeds this threshold.

2. Method according to claim 1, characterized by the feature that the method used to determine whether the averaged count rate per unit time exceeds the threshold is that each time a preset count value is reached, a check is made to establish, whether or not a time counter, which was started at the same time as the error sum counter, has exceeded a preset value.

3. Method according to claim 1 characterized by the feature that the method used to determine whether the averaged count rate per unit time exceeds the threshold is that each time a preset time interval expires, a check is made to establish whether the count reached in the time interval is larger or smaller than a pre-defined count.

4. Method according to one of the claims 1 to 3, characterized by the feature that the value allocated to a missing test packet is greater than the value allocated to a faulty test packet.

5. Application of the method according to one of the claims 1 to 4 for maintaining the operational capability of a loop-based telecommunications system (fig. 1), in which communication between the connecting units (10) is achieved using code-addressed packets.

**Revendications**

1. Procédé pour maintenir l'aptitude au fonctionnement d'un dispositif de transmission d'informations numériques lors de l'apparition de sources de dérangements limitées localement en comparaison de l'étudue de l'installation dans l'espace, par exclusion commandée de ces sources de dérangements, où
– plusieurs unités d'appel (10) branchées en série sont prévues, dont chacune est reliée par au moins une ligne d'entrée (12, 13, 14) à un nombre correspondant d'unités d'appel (10) précédentes dans le sens des signaux et par au moins une ligne de sortie (12', 13') à un nombre correspondant d'unités d'appel (10) suivantes dans le sens des signaux;
– au moins un poste de surveillance (10.4) est prévu, qui émet des paquets de signaux d'épreuve pour le contrôle de l'aptitude au fonctionnement de l'installation;
– chaque unité d'appel avec au moins deux lignes d'entrée comporte un commutateur (18) par lequel l'unité d'appel est, suivant les signaux, reliée sélectivement à l'une de ses lignes d'entrée (12, 13, 14);
– la transmission des informations se fait au moyen de paquets d'informations dans exclusivement un sens des signaux par transmission des paquets d'une unité d'appel à une unité d'appel;
– chaque unité d'appel (10) comporte un circuit récepteur (23) pour reconnaître et recevoir les paquets qui lui sont destinés; caractérisé en ce que

a) l'un des postes de surveillance (10.4) émet continuellement, dans la cadence de temps en principe rigide, des paquets de signaux d'épreuve qui sont dirigés vers toutes les unités d'appel (10);
b) dans chaque unité d'appel (10) un circuit de contrôle (32) vérifie si un paquet de signaux d'épreuve est reçu chaque fois aux intervalles prescrits par la cadence de temps du poste de surveillance (10.4) et, lorsque c'est le cas, si ce paquet est exempt de défauts;
c) chaque unité d'appel (10), pour chaque paquet de signaux d'épreuve manquant ou défectueux, fournit un avis de défaut correspondant, d'une part à un compteur totalisateur de défauts (35) propre et d'autre part, par l'intermédiaire d'un paquet de signaux avertisseur de défauts, à toutes les unités d'appel subséquentes qui sont reliées directement, par une ligne (12, 13, 14), à l'unité d'appel (10);
d) chaque compteur totalisateur de défauts (35), pour chaque avis de défaut reçu par l'unité d'appel (10) propre, augmente son contenu numérique d'une quantité numérique associée au défaut et, pour chaque avis de défaut reçu par l'intermédiaire d'un paquet de signaux avertisseur de défaut, diminue son contenu numérique de manière correspondante;
e) dans chaque unité d'appel (10), le taux de changement de contenu numérique dans le temps est comparé à au moins une valeur de seuil de taux fixée à l'avance, et le commutateur (18), pour autant que le taux moyen dans le temps dépasse la valeur de seuil de taux, est commuté sur une autre des lignes d'entrée (12, 13, 14).

2. Procédé suivant la revendication 1, caractérisé en ce que la comparaison du taux moyen du changement de contenu numérique dans le temps avec la valeur de seuil de taux est effectuée par le fait que, chaque fois après qu'ait été atteint un contenu numérique fixé à l'avance, il est verifié si un compteur de temps déclenché en même temps que le comtage a dépassé ou non un intervalle de temps fixé à l'avance.

3. Procédé suivant la revendication 1, caractérisé en ce que la comparaison du taux moyen du changement de contenu numérique dans le temps avec la valeur de seuil de taux est effectuée par le fait que, chaque fois lors de l'écoulement d'un intervalle de temps fixé à l'avance, il est verifié si le contenu numérique atteint pendant l'intervalle de temps est plus grand ou plus petit qu'un contenu numérique fixé à l'avance.

4. Procédé suivant une des revendications 1 à 3, caractérisé en ce que la valeur associée à un paquet de signaux d'épreuve manquant est plus grand que la valeur associée à un paquet de signaux d'épreuve défectueux.

5. Application du procédé suivant une des revendications 1 à 4 pour maintenir l'aptitude au fonctionnement d'un dispositif de transmission d'informations numériques en forme d'anneau (fig. 1), dans lequel l'échange d'informations entre les unités d'appel (10) se fait au moyen de paquets de signaux adressés par code.

Fig. 1

Fig. 2